(19) Europäisches Patentamt / European Patent Office / Office européen des brevets

(11) **EP 4 516 087 B1**

(12) **EUROPÄISCHE PATENTSCHRIFT**

(45) Veröffentlichungstag und Bekanntmachung des Hinweises auf die Patenterteilung:
**15.04.2026 Patentblatt 2026/16**

(21) Anmeldenummer: **24190187.5**

(22) Anmeldetag: **23.07.2024**

(51) Internationale Patentklassifikation (IPC):
***A01D 43/08*** *(2006.01)*

(52) Gemeinsame Patentklassifikation (CPC):
**A01D 43/085;** A01D 43/081

(54) **FELDHÄCKSLER UND BETRIEBSVERFAHREN DAFÜR**

FORAGE HARVESTER AND OPERATING METHOD THEREOF

RAMASSEUSE-HACHEUSE ET SON PROCÉDÉ DE FONCTIONNEMENT

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **01.09.2023 DE 102023123659**

(43) Veröffentlichungstag der Anmeldung:
**05.03.2025 Patentblatt 2025/10**

(73) Patentinhaber: **CLAAS Selbstfahrende Erntemaschinen GmbH**
**33428 Harsewinkel (DE)**

(72) Erfinder:
• **Neitemeier, Dennis**
**59510 Lippetal (DE)**
• **Belau, Sven Carsten**
**33332 Gütersloh (DE)**
• **Bönig Dr., Ingo**
**33330 Gütersloh (DE)**
• **Brune, Markus**
**33428 Harsewinkel (DE)**
• **Klein-Helmkamp, Marwin**
**49565 Bramsche (DE)**
• **Witte, Johann**
**58730 Fröndenberg (DE)**

(74) Vertreter: **CLAAS Gruppe**
**Mühlenwinkel 1**
**33428 Harsewinkel (DE)**

(56) Entgegenhaltungen:
**DE-A1- 102020 123 526 US-A1- 2023 133 909**

**Beschreibung**

Die vorliegende Erfindung betrifft einen Feldhäcksler, ein Betriebsverfahren dafür sowie ein in dem Feldhäcksler bzw. zur Durchführung des Verfahrens einsetzbares Computerprogramm-Produkt.

Beim Betrieb eines Feldhäckslers ist abzuwägen zwischen den Anforderungen, im Erntegut enthaltene Nährstoffe so aufzuschließen, dass sie von mit dem gehäckselten Erntegut gefüttertem Vieh gut und vollständig verwertet werden können, und einen zeit- und energieffizienten Erntebetrieb zu ermöglichen. Im Erntegut enthaltene Körner sollten einerseits so weit zerkleinert sein, dass sie gut verdaut werden können, andererseits soll auf das Zerkleinern möglichst wenig Zeit und Antriebsenergie verwandt werden.

Um die Eignung von Maishäcksel als Viehfutter zu quantifizieren, ist der Corn Silage Processing Score, im Folgenden mit CSPS abgekürzt, definiert worden. Der CSPS ist definiert als eine Funktion der Größenverteilung von Faser- und Stärketeilchen in Futtermaterial und wird herkömmlicherweise durch Siebeverfahren gemessen, die am fertigen Futtermittel durchgeführt werden.

Aus DE 10 2020 123 526 A1 ist ein Feldhäcksler bekannt, bei dem für das Häckselergebnis relevante Betriebsgrößen wie Häckslertrommeldrehzahl, Crackerspaltbreite oder Drehzahldifferenz der Crackerwalzen mittels eines Kennfeldes mit einer Aufbereitungsqualität verknüpft werden, so dass für eine vorgegebene Aufbereitungsqualität geeignete Werte dieser Betriebsgrößen anhand des Kennfeldes ermittelt und eingestellt werden können. Eine Definition der Aufbereitungsqualität wird jedoch nicht gegeben.

DE 10 2018 104 286 beschreibt einen Feldhäcksler, bei dem die anhand eines Kennfeldes einzustellende Größe die Verdichtbarkeit des Häckselgutes ist.

Eine Aufgabe der Erfindung ist, einen selbstfahrenden Feldhäcksler anzugeben, der ernährungsphysiologisch wertvolles Häckselgut mit minimalem Zeit- und Energieeinsatz erzeugt.

Die Aufgabe wird einem Aspekt der Erfindung zufolge gelöst, indem bei einem selbstfahrenden Feldhäcksler mit einer zum Häckseln von Erntegut mit einer variablen Drehzahl angetriebenen Häckseltrommel, einem auf einem Weg des Ernteguts durch den Feldhäcksler hinter der Häckseltrommel angeordneten Crackerwalzenpaar mit variabler Spaltbreite zum Zerkleinern von Körnern im gehäckselten Erntegut und einer Steuereinheit zum Steuern der Drehzahl und der Spaltbreite die Steuereinheit Teil eines anhand eines Kennfeldes geregelten Einstellautomaten ist, wobei das Kennfeld einen Corn Silage Processing Score, CSPS, in Abhängigkeit wenigstens von der Drehzahl und der Spaltbreite beschreibt.

Die Steuereinheit kann betrieben werden, um anhand des Kennfeldes die Drehzahl und die Spaltbreite jeweils passend zu einem Sollwert des CSPS einzustellen.

Wenn die Steuereinheit eine signifikante Abweichung zwischen Soll- und Istwert des CSPS feststellt, muss eine Betriebsgröße angepasst werden, um die Abweichung zu verringern. Infolge der hohen Trägheit der Häckseltrommel ist eine Anpassung ihrer Drehzahl selbst dann energieaufwendig und zu vermeiden, wenn sie willkürlich festgelegt werden könnte. In der Praxis ist es aber üblich, dass die Drehzahl der Trommel fest an die des Motors gekoppelt ist, so dass, wenn der Motor am Optimum seiner Drehzahl-Drehmoment-Kennlinie gefahren werden soll, die Trommeldrehzahl dadurch feststeht. Daher ist bevorzugt, dass die Steuereinheit der Abweichung zunächst entgegenzuwirken versucht, indem sie die Spaltbreite in einer Richtung zu ändert, für die basierend auf dem Kennfeld eine Verringerung der Abweichung zu erwarten ist, und die Drehzahl nur dann ändert, wenn die Spaltbreite nicht weiter verändert werden kann, weil sie eine Grenze ihres Einstellbereichs erreicht hat.

Eine Messung des CSPS mittels herkömmlicher Siebeversuche ist zu zeitaufwendig, als dass anhand der dabei erhaltenen Ergebnisse die Einstellungen des Feldhäckslers vorgenommen werden könnten. Da sich, z.B. aufgrund unterschiedlicher Bodenbeschaffenheit, die Eigenschaften des Ernteguts im Laufe eines Ernteeinsatzes ändern können, ist insbesondere eine Anpassung der Einstellungen des Feldhäckslers im laufenden Einsatz auf diese Weise kaum praktikabel. Deshalb ist vorzugsweise eine Bildverarbeitungseinheit mit einer auf dem Weg des Ernteguts hinter dem Crackerwalzenpaar angeordneten Kamera verbunden, um einen Istwert des CSPS aus von der Kamera gelieferten Bildern des Ernteguts zu ermitteln.

Die Bildverarbeitungseinheit kann insbesondere eingerichtet sein, wenigstens eine Abmessung von in den Bildern abgebildeten Teilchen zu ermitteln und anhand der Abmessung über die Zugehörigkeit des Teilchens zu einer für die Ermittlung des Istwerts des CSPS relevanten Größenfraktion zu entscheiden. D.h. die Notwendigkeit des mechanischen Siebens entfällt dadurch, dass für die Teilchen des Ernteguts rechnerisch entschieden wird, in welcher Siebfraktion sie gelandet wären. So kann ein Istwert des CSPS mit so geringer Verzögerung, in der Größenordnung von Sekunden oder Sekundenbruchteilen, ermittelt werden, dass davon ausgegangen werden kann, dass sich daraus ergebende Korrekturen der Spaltbreite und Drehzahl für zum Zeitpunkt der Korrektur aufgenommenes Erntegut noch angemessen sind.

Der von dem Einstellautomaten im Betrieb erreichte CSPS-Wert hängt nicht nur von Drehzahl und Spaltbreite ab, sondern auch von der Beschaffenheit des Ernteguts, die je nach Sorte und Standort des Ernteguts sowie abhängig von klimatischen Bedingungen während des Wachstums variieren kann, so dass ein Kennfeld, dass an einem gegeben Standort einmal eine gute Vorhersage des CSPS-Werts ermöglicht hat, dies bei Einsatz an einem anderen Standort oder sogar am gleichen Standort in einem anderen Jahr nicht unbedingt leisten muss. Deshalb sollte die Steuereinheit in der Lage sein, das Kennfeld anhand von Abweichungen zwischen einem für ein Wertepaar von Drehzahl und Spaltbreite von dem Kennfeld vorhergesagten CSPS-Wert und einem für das Wertepaar gemessenen CSPS-Wert zu optimieren, um so auch für einen anderen Standort oder ein anderes Erntejahr eine befriedigende Vorhersage des CSPS-Werts zu ermöglichen.

Um sicherzustellen, dass nur signifikante Messwerte in die Optimierung eingehen, kann vorgesehen werden, dass nur einen während eines quasistationären Zustands des Feldhäckslers gemessenen CSPS-Wert für die Optimierung heranzieht. Als quasistationär wird der Zustand des Feldhäckslers dann angesehen, wenn in einer vorgegebenen Zeitspanne, die länger ist eine Verweildauer des Ernteguts in dem Feldhäcksler, Änderungen der Drehzahl, der Spaltbreite und des CSPS-Werts kleiner sind als eine vorgegebene relative Schwankungsbreite, d.h. wenn davon ausgegangen werden kann, dass der momentan messbare CSPS-Wert auch mit hinreichender Genauigkeit demjenigen gleicht, der zum gleichen Zeitpunkt von Häckseltrommel und Crackerwalzen des Feldhäckslers erreicht wird. Die vorgegebene relative Schwankungsbreite kann z.B. kleiner oder gleich 10% oder kleiner oder gleich 5% gewählt sein.

Das Kennfeld kann durch eine mehrparametrige Funktion wenigstens der Drehzahl und der Spaltbreite sowie einen Satz von Werten der Parameter dieser Funktion definiert sein. Dies ermöglicht eine Aktualisierung des Kennfeldes durch Ändern der Parameterwerte zur Anpassung an veränderte Eigenschaften des Ernteguts basierend auf einer kleinen Zahl von Wertepaaren aus jeweils einem anhand des Kennfeldes erwarteten Wert des CSPS für gegebene Werte von Drehzahl und Spaltbreite und einem bei diesen Werten gemessenen Istwert des CSPS.

Eine Optimierungseinheit kann eingerichtet sein, um basierend auf einem Datenbestand von Wertepaaren der Drehzahl und der Spaltbreite und für diese Wertepaare gemessenen CSPS-Werten den Satz von Parameterwerten mit dem Ziel zu optimieren, dass eine Abweichung zwischen einem Istwert des CSPS und einem anhand des Kennfeldes erwarteten Werts des CSPS minimiert wird.

Der Datenbestand kann allein aus im Laufe eines Einsatzes des Feldhäckslers gesammelten CSPS-Werten und den zugehörigen Wertepaaren von Drehzahl und Spaltbreite bestehen; vorzugsweise umfasst er darüber hinaus aber auch vorab gespeicherte und bereits vor Beginn des Einsatzes verfügbare Daten. Indem diese in die Optimierung des Satzes von Parametern mit einbezogen werden, kann die statistische Grundlage der Optimierung verbreitert werden, und heftige Schwankungen von in der Optimierung ermittelten Parameterwerten, insbesondere in einer Anfangsphase des Einsatzes, können vermieden werden.

Andererseits muss sichergestellt werden, dass die vorab gespeicherten Daten das Ergebnis der Optimierung nicht auf Dauer verfälschen, wenn sie nicht mehr aktuell sind. Zu diesem Zweck kann vorgesehen werden, dass die Wertepaare des Datenbestandes in einem von den Werten, die die Drehzahl und die Spaltbreite im Betrieb annehmen können, definierten zweidimensionalen Einstellbereich ein Punktgitter definieren, und dass, wenn ein gemessener CSPS-Wert für ein Wertepaar von Drehzahl ($n_{HT}$) und Spaltbreite (CC) vorliegt, das keinem Punkt des Gitters entspricht, der diesem Wertepaar nächstbenachbarte Punkt des Gitters ermittelt und der diesem Punkt zugeordnete CSPS-Wert des Datenbestandes anhand des gemessenen CSPS-Werts überschrieben wird.

Die mehrparametrige Funktion ist vorzugsweise ein Polynom zweiter Ordnung, das die Drehzahl und die Spaltbreite als Variablen hat. Polynome höherer Ordnung kommen zwar auch in Betracht, allerdings nimmt der für eine Anpassung der Parameterwerte erforderliche Zeitaufwand mit der Ordnung des Polynoms zu, da die Zahl der Wertepaare von erwarteten und gemessenen Werten des CSPS, die für einen Fit der Parameterwerte benötigt werden, mit der Ordnung des Polynoms stark ansteigt.

Damit alte Wertepaare, die den aktuellen Eigenschaften des Ernteguts nicht mehr entsprechen, das Ergebnis der Optimierung nicht verfälschen, sollte die Gewichtung, mit der Paare von gemessenen und erwarteten Werten des CSPS in die Optimierung eingehen, mit dem Alter der Paare abnehmen.

Wenn die Zahl von verfügbaren Wertepaaren von gemessenen und erwarteten Werten des CSPS kleiner ist als die Zahl der Parameter der mehrparametrigen Funktion, so bedeutet dies nicht, dass eine Optimierung nicht möglich wäre, sondern lediglich, dass es eine Vielzahl von Sätzen von Parameterwerten geben kann, für die die Differenz zwischen gemessenem und erwartetem Wert verschwindet. Einer dieser Sätze kann durchaus für eine Optimierung herangezogen werden.

Die Aufgabe wird einem zweiten Aspekt zufolge gelöst durch ein Verfahren zum Betreiben eines Feldhäckslers, insbesondere eines Feldhäckslers wie oben beschrieben, mit den Schritten:

- Vorgeben einer eine mehrparametrigen Funktion wenigstens der Drehzahl einer Häckseltrommel und der Spaltbreite eines Crackerspalts sowie eines ursprünglichen Satzes von Parameterwerten, die ein ursprüngliches Kennfeld des CSPS in Abhängigkeit wenigstens von der Drehzahl und der Spaltbreite definieren;
- Ermitteln eines Istwertes des CSPS für Istwerte der Drehzahl und der Spaltbreite;
- Ersetzen des ursprünglichen Satzes von Parameterwerten durch einen optimierten Satz, wobei die Parameterwerte des optimierten Satzes so gewählt sind, dass die Abweichung zwischen dem Istwert des CSPS und einem anhand des Kennfelds erwarteten Satz bei Verwendung der optimierten Parameterwerte kleiner ist als bei Verwendung der ursprünglichen Parameterwerte.

Es versteht sich, dass das Kennfeld außer von der Drehzahl und der Spaltbreite noch von weiteren Betriebsgrößen des Feldhäckslers wie etwa einer Geschwindigkeitsdifferenz zwischen den Walzen des Crackerspalts abhängen kann, und dass mit diesen weiteren Betriebsgrößen verknüpfte Parameter der mehrparametrigen Funktion auch Gegenstand der Optimierung sein können. Auch hier gilt jedoch, dass es wünschenswert ist, die Zahl der Betriebsgrößen nicht ausufern zu lassen, um in kurzer Zeit ein Optimierungsergebnis zur Verfügung zu haben.

Gegenstand der Erfindung ist ferner ein Computerprogramm-Produkt, das ausführbare Anweisungen umfasst, die, wenn sie von einem Computer ausgeführt werden, diesen befähigen, als wenigstens als Steuereinheit, optional auch als Optimierungseinheit und/oder Bildverarbeitungseinheit, in einem Feldhäcksler wie oben beschrieben zu arbeiten oder das oben beschriebene Verfahren auszuführen.

Weitere Merkmale und Vorteile der Erfindung ergeben sich aus der nachfolgenden Beschreibung von Ausführungsbeispielen unter Bezugnahme auf die beigefügten Figuren. Es zeigen:

Fig. 1    einen erfindungsgemäßen Feldhäcksler in einer Seitenansicht;

Fig. 2    einen Ausschnitt eines von einer Kamera des Feldhäckslers erfassten Bildes;

Fig. 3    ein exemplarisches Kennfeld; und

Fig. 4    ein Diagramm eines Datenbestandes, der der Berechnung des Kennfeldes durch einen Bordrechner des Feldhäckslers zugrundeliegt.

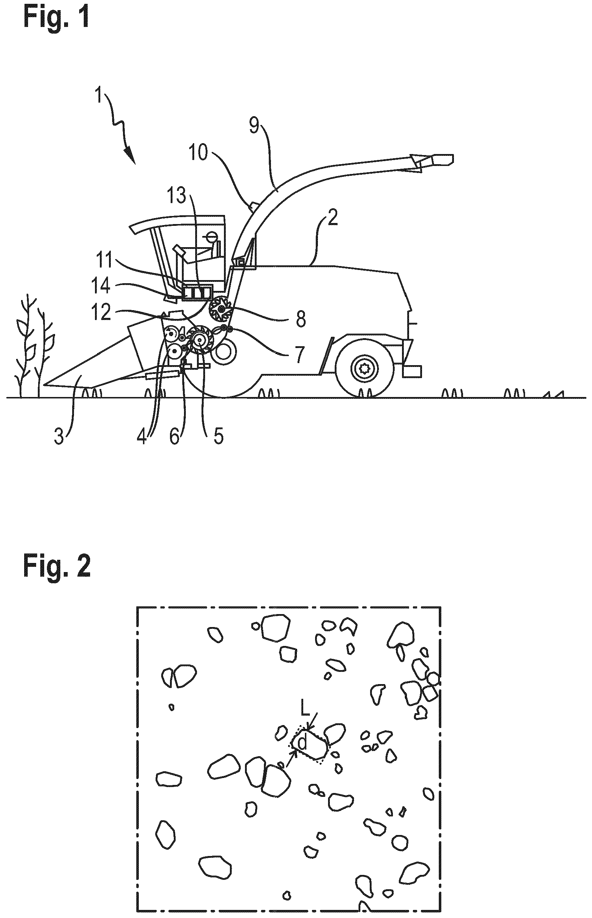

Fig. 1 zeigt in einer teilweise transparenten Seitenansicht einen Feldhäcksler 1. Der Feldhäcksler hat eine starre Karosserie 2, an der ein Vorsatzgerät 3, hier ein Maisgebiss, höhenverstellbar angebracht ist. Von dem Vorsatzgerät 3 gekapptes und aufgefangenes Erntegut wird über ein Paar von Einzugwalzen 4 verdichtet und einem Häckselwerk zugeführt, in dem eine rotierende Häckseltrommel 5 im Zusammenwirken mit einer ortsfesten Schneidkante 6 das Erntegut zerkleinert. Die Länge der dabei erhaltenen Häckselteilchen ist proportional zum Verhältnis der Geschwindigkeiten von Einzugwalzenpaar 4 und Häckseltrommel 5.

Auf dem Weg des Ernteguts durch den Feldhäcksler 1 folgt in an sich bekannter Weise auf das Häckselwerk ein Paar Crackerwalzen 7, die mit unterschiedlichen Umfangsgeschwindigkeiten angetrieben sind, um im Häckselgut enthaltene Körner zu zerkleinern. Die Breite eines Spalts zwischen den Crackerwalzen 7 ist verstellbar und bestimmt die Größe der am Ausgang des Spalts erhaltenen Kornbruchstücke.

Ein auf die Crackerwalzen 7 folgender Nachbeschleuniger 8 dient zum Beschleunigen des Häckselguts auf eine zum Durchlaufen eines Auswurfkrümmers 9 erforderliche Geschwindigkeit.

Eine Kamera 10 ist am Weg des Ernteguts stromabwärts von den Crackerwalzen 7 angeordnet, um Bilder des Häckselguts zu erfassen. Sie kann abweichend von der Figur vor dem Nachbeschleuniger 8 angeordnet sein, ihre Platzierung dahinter, wie etwa am Auswurfkrümmer 9, hat den Vorteil, dass dort die Dichte der Teilchen im Strom des Häckselguts verringert ist, so dass einzelne Teilchen in den Bildern besser identifizierbar sind und die Wahrscheinlichkeit, dass Teilchen überlappen und deshalb ihre Größe nicht sicher beurteilt werden kann, verringert ist.

Die Kamera 10 ist verbunden mit einer Bildverarbeitungseinheit 12 in einem Bordcomputer 11 des Feldhäckslers 1. Die Bildverarbeitungseinheit 12 ist programmiert, Körner und Kornbruchstücke in den Bildern der Kamera 10 zu identifizieren. Fig. 2 zeigt das Ergebnis einer solchen Identifikation: Jedem Pixel des Bildes ist einer von zwei Werten zugewiesen, je nachdem ob das Pixel ein Korn oder Kornbruchstück zeigt oder nicht. In Fig. 2 sind Körner und Kornbruchstücke weiß vor schwarzen Hintergrund dargestellt.

In einem Folgeschritt ermittelt die Bildverarbeitungseinheit 12 für jedes identifizierte Korn oder Kornbruchstück wie in Fig 2 an einem Beispiel veranschaulicht eine Richtung L seiner kleinsten Abmessung d und, anhand eines bekannten Abbildungsmaßstabs der Kamera 10, den Betrag dieser Abmessung d, um anhand des Ergebnisses zu entscheiden, ob das Korn oder Kornbruchstück ein Sieb mit einer für die experimentelle Ermittlung des CSPS vorgeschriebenen Maschenweite hätte passieren können oder nicht. So werden sämtliche Körner oder -bruchstücke eines Bildes oder einer Serie von aufeinanderfolgenden Bildern jeweils einer von mehreren Größenfraktionen zugeordnet, und die Mächtigkeit einer jeden Fraktion wird anhand der Masse der ihr zugeordneten Teilchen berechnet. Die Zuordnung eines CSPS-Messwertes zu den so erhaltenen Mächtigkeiten erfolgt nach denselben Regeln, wie wenn die Fraktionen in herkömmlicher Weise durch physisches Sieben erhalten und dann gewogen worden wären, und braucht daher hier nicht weiter erläutert zu werden.

Auch wenn nicht genau bekannt ist, wie der beim Häckseln erzielte CSPS-Wert von der Drehzahl $n_{HT}$ der Häckseltrommel 5 und der Breite CC des Spalts zwischen den Crackerwalzen 7 abhängt, kann davon ausgegangen werden, dass er sich durch eine Taylorreihe in zwei Dimensionen approximieren lässt, d.h. dass

$$CSPS(CC, n_{HT}) = p_0 + p_1\,CC + p_2\,n_{HT} + p_3\,CC^2 + p_4\,CC\,n_{HT} + p_5\,n\_HT^2$$

in guter Näherung gilt, wobei $p_0$, ..., $p_5$ empirische Parameter sind, deren Werte sich je nach Eigenschaften des Ernteguts ändern können. Vom Hersteller für normales oder als normal erachtetes Erntegut ermittelte Parameterwerte $p_0^*$, ..., $p_5^*$ können daher im Bordcomputer 11 hinterlegt sein, um zu Beginn eines Ernteeinsatzes für einen gewünschten CPPS-Wert des Ernteguts geeignete Werte von CC und $n_{HT}$ zu finden und einzustellen; es ist aber davon auszugehen, dass der mit den so gefundenen Werten von CC und $n_{HT}$ tatsächlich realisierte CSPS-Wert vom gewünschten abweicht und dass anhand der beobachteten Abweichung CC und $n_{HT}$ angepasst werden müssen, um den gewünschten Wert zu erreichen. Diese Anpassung zu bewirken ist Aufgabe einer Optimierungseinheit 13 des Bordcomputers 11; eine Steuereinheit 14 steuert die Drehzahl eines die Häckseltrommel antreibenden Motors und die Breite eines Crackerspalts zwischen den Crackerwalzen 7. Mit anderen Worten bildet die Steuereinheit 14 zusammen mit der Häckseltrommel und dem Crackerspalt als Erntegutbehandlungsmittel und der Kamera 10 als Sensor einen Einstellautomaten im Sinne von EP 3 542 610 B1.

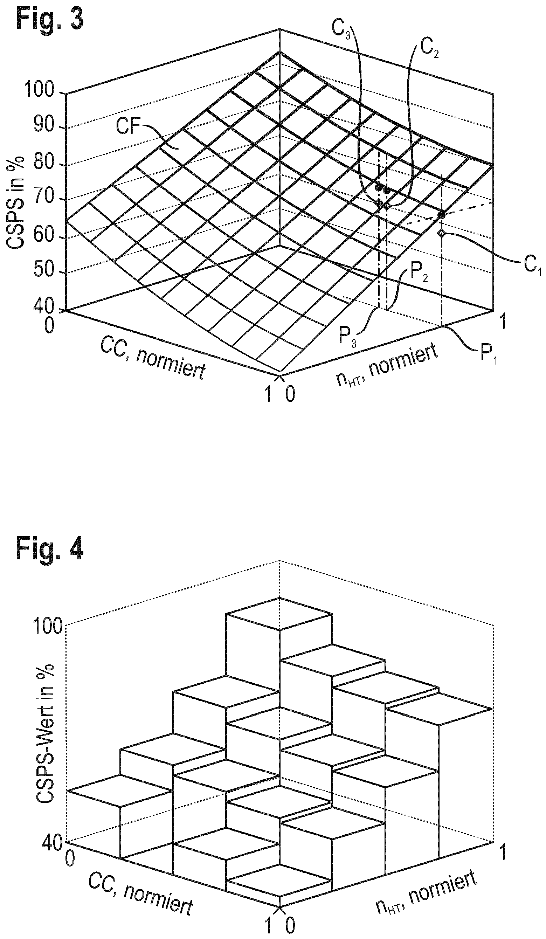

Ein Verfahren hierfür wird mit Bezug auf Fig. 3 beschrieben. Fig.3 zeigt ein exemplarisches Kennfeld CF für den CSPS, berechnet vom Bordcomputer 11 als Funktion der Drehzahl $n_{HT}$ und der Spaltbreite CC anhand der obenstehenden Formel auf Grundlage der der vom Hersteller vorgegebenen Parameterwerte $p_0^*$, ..., $p_5^*$. Für eine gute Aufbereitung sollte der CSPS des Ernteguts wenigstens 70% erreichen; dieser Wert wird daher als Sollwert des CSPS angesetzt, und für den Beginn eines Ernteeinsatzes wird ein Wertepaar $P_1$=($n_{HT}$, CC) von Drehzahl und Spaltbreite eingestellt, für das CSPS($n_{HT}$, CC)=70% gilt.

Da das in dem betreffenden Ernteeinsatz verarbeitete Erntegut von demjenigen, an dem die Parameterwerte $p_0^*$, ..., $p_5^*$ ermittelt wurden, verschieden ist, ist zu erwarten, dass der von der Bildverarbeitungseinheit 12 ermittelte Messwert CSPS($P_1$), der beim Betrieb des Feldhäckslers mit der Einstellung $P_1$ erhalten wird, von den erwarteten 70% abweicht, und z.B. bei 65% liegt, in Fig.3 dargestellt als Raute $C_1$.

Um den gewünschten CSPS-Wert dennoch zu erreichen, reduziert der Bordcomputer 11 die Spaltbreite CC. Zu diesem Zweck kann er die Differenz zwischen Sollwert (70%) und Istwert (65%) des CSPS berechnen, sie zum Sollwert hinzuaddieren, um so einen neuen Sollwert (75%) zu erhalten, und eine neue Einstellung $P_2$ ermitteln, bei der CSPS($P_2$) =75% gilt. Wenn eine solche Einstellung $P_2$ existiert, die sich von $P_1$ nur in der Spaltbreite CC unterscheidet, dann wird diese gewählt und eingestellt; notfalls wird zusätzlich auch $n_{HT}$ angepasst. Es ist zu erwarten, dass der sich nun einstellende CSPS-Wert $C_2$ erheblich näher am Zielwert von 70% liegt als $C_1$.

Eine verbleibende Differenz zwischen Soll- und Istwert (Messwert) kann weiter reduziert werden, indem erneut wie oben beschrieben eine neue Einstellung $P_3$ bestimmt und eingestellt wird. Ein daraus resultierender CSPS-Wert $C_3$ wird gemessen; damit liegen drei Stützpunkte vor, die es erlauben, diejenigen Parameter $p_0$, $p_1$, $p_3$, die die Abhängigkeit des CSPS-Werts von der Spaltbreite CC beschreiben, für das aktuelle Erntegut neu zu berechnen. Indem die so erhaltenen neuen Werte in der obigen Formel an die Stelle der ursprünglichen gesetzt werden, wird ein aktualisiertes Kennfeld erhalten, das den aktuell wahren Zusammenhang zwischen CSPS und CC genauer wiedergibt als das ursprüngliche.

Wenn mehr als drei Messwerte des CSPS bei gleicher Drehzahl $n_{HT}$ und unterschiedlichen Spaltbreiten CC vorliegen, ist es im Allgemeinen nicht mehr möglich, Parameterwerte $p_0$, $p_1$, $p_3$ zu finden, die die Messwerte exakt reproduzieren; in diesem Fall wählt der Bordcomputer 11 als Parameterwerte $p_0$, $p_1$, $p_3$ diejenigen, die die Messwerte mit minimaler quadrierter Abweichung reproduzieren. Rechenverfahren hierfür, auch als Least-Squares-Fit bezeichnet, sind allgemein bekannt.

Dass die Messwerte $C_1$, $C_2$, $C_3$ keine Aktualisierung der übrigen, den Einfluss der Drehzahl $n_{HT}$ beschreibenden Parameter $p_2$, $p_4$, $p_5$ ermöglichen, ist nicht von Nachteil, solange die Drehzahl $n_{HT}$ nicht geändert werden muss. Sobald dies geschieht, werden jedoch zwangsläufig auch Messwerte des CSPS erhalten, die einen Rückschluss auf diese Parameter zulassen.

Tatsächlich erlaubt die weitgehende Unabhängigkeit der Parameter $p_2$, $p_4$, $p_5$ von den bei gleicher Drehzahl aufgenommenen Messwerten $C_1$, $C_2$, $C_3$ eine Vereinfachung der Struktur der Steuereinheit 14: Anstelle einer einheitlichen Steuereinheit zum Steuern von sowohl der Drehzahl $n_{HT}$ als auch der Spaltbreite CC können zwei Steuereinheiten, eine für die Spaltbreite CC und die andere für die Drehzahl $n_{HT}$, vorgesehen werden. Solange die Drehzahl $n_{HT}$ konstant gehalten wird, kann nur die Steuereinheit für die Spaltbreite die ihr zugeordneten Parameter $p_0$, $p_1$, $p_3$ optimieren, wobei sie die übrigen Parameter als $p_2$, $p_4$, $p_5$ als externe Information behandelt, die bei der Festlegung der Spaltbreite zu berücksichtigen ist. Wenn später auch ein geänderter Wert der Drehzahl eingestellt wird, dann genügt es zum Anpassen des Kennfeldes an den für diese veränderte Drehzahl beobachteten CSPS-Wert, dass die Steuereinheit für die Drehzahl den Parameter $p_2$ anpasst, während $p_0$, $p_1$, $p_3$ externe Information darstellen, die berücksichtigt wird, aber von der Steuereinheit für die Drehzahl nicht verändert werden kann. Wenn Messergebnisse von CSPS für mehr als zwei Drehzahlwerte vorliegen, kann die Steuereinheit für die Drehzahl auch $p_4$ und $p_5$ an die Messergebnisse anfitten, bleibt aber weiter ohne Einfluss auf die Parameter $p_0$, $p_1$, $p_3$. Da die Steuereinheit für die Spaltbreite die angepassten

Parameterwerte $p_2$, $p_4$, $p_5$ als externe Information empfängt, kann sie diese bei jeder späteren Anpassung korrekt berücksichtigen. Die Gewichtung, mit der einzelne Messwerte in diese Berechnung eingehen, kann mit dem Alter der Messwerte abnehmend festgelegt werden, so dass neue Messwerte, die mit größerer Wahrscheinlichkeit für die aktuellen Verarbeitungseigenschaften des Ernteguts repräsentativ sind, das Ergebnis stärker beeinflussen als ältere.

Mit einer Anpassung des Kennfeldes muss nicht abgewartet werden, bis wie oben beschrieben drei oder mehr Messwerte vorliegen. Äquivalent zur oben beschriebenen Vorgehensweise beim Festlegen der korrigierten Einstellung $P_2$ ist etwa, bei Vorliegen des Messwerts $C_1$ sofort den Parameter $p_0$ so zu korrigieren, dass die Formel den Messwert $C_1$ korrekt voraussagt, im oben beschriebenen Fall also, $p_0$ um 5% zu vermindern, und dann $P_2$ anhand der korrigierten Formel zu ermitteln.

Bei dem oben beschriebenen Verfahren basiert die Berechnung der Parameter $p_0$, ..., $p_5$ komplett auf den während eines laufenden Einsatzes des Feldhäckslers aufgenommenen Messungen des CSPS, sobald die Zahl der Messwerte ausreicht, um die erforderlichen Berechnungen vornehmen zu können. Dadurch hat jeder einzelne Messwert einen hohen Einfluss auf das Optimierungsergebnis, und einzelne Messfehler können dazu führen, dass ein falscher Parametersatz berechnet wird, der, wenn er zum Steuern von Drehzahl und Spaltbreite eingesetzt wird, ein grob vom Erwarteten abweichender CSPS-Wert erhalten wird.

Dass ein Parametersatz fehlerhaft ist, kann zum Beispiel ausgegangen werden, wenn der anhand der Parameterwerte berechnete CSPS-Wert mit zunehmender Spaltbreite CC oder zunehmender Drehzahl $n_{HT}$ abnimmt. Um unter anderem solche Ereignisse abzufangen, kann vorgesehen werden, dass die Steuereinheit 14 ein Optimierungsergebnis, bei dem im Vergleich zu einem früheren einer der Parameter $p_0$, ..., $p_5$ sein Vorzeichen geändert hat, oder bei dem die Änderung eines der Parameter eine zulässige Obergrenze überschreitet, als falsch erkennt. Beim Auftreten eines solchen falschen Ergebnisses kann die Steuereinheit 14 den bei der vorhergehenden Optimierung erhaltenen Satz von Parameterwerten $p_0$, ..., $p_5$ weiter verwenden und seit der Berechnung dieses Satzes hinzugekommene Messwerte verwerfen; eine andere Möglichkeit ist, die im Laufe des aktuellen Einsatzes des Feldhäckslers gewonnenen CSPS-Messwerte komplett zu verwerfen, zu den vom Hersteller vorgegebenen Parameterwerten $p_0^*$, ..., $p_5^*$ zurückzukehren und das oben beschriebene Verfahren von Neuem zu beginnen.

Einer bevorzugten Weiterbildung zufolge ist vom Hersteller nicht ein Satz von Parameterwerten $p_0^*$, ..., $p_5^*$ vorgegeben, sondern ein Datenbestand von Wertepaaren der Drehzahl $n_{HT}$ und der Spaltbreite CC und für diese Wertepaare gemessenen CSPS-Werten. Fig. 4 zeigt ein Beispiel eines solchen Datenbestands als dreidimensionales Diagramm. Die Einstellbereiche der Spaltbreite CC und der Drehzahl $n_{HT}$ sind in $m_1$ bzw. $m_2$ vorzugsweise gleich große Intervalle unterteilt. In Fig. 4 ist $m_1 = m_2 = 4$, realistische Werte betragen bis zu 20, M1=10 oder M2=10 ist bevorzugt. Der von der Spaltbreite CC und der Drehzahl $n_{HT}$ aufgespannte zweidimensionale Einstellbereich ist so in n1*n2 Unterintervalle gegliedert. Wenn in (willkürlichen Einheiten) die Spaltbreite CC und der Drehzahl $n_{HT}$ jeweils in einem Intervall [0,1] einstellbar sind, dann bilden Mittelpunkte der Unterintervalle ein regelmäßiges Gitter jeweils bei Koordinatenwerten $0,5/m_1$, $1,5/m_1$,..., $(m_1-0,5)/m_1$ der Spaltbreite und $0,5/m_2$, $1,5/m_2$,..., $(m_2-0,5)/m_2$ der Drehzahl. Für jedes dieser Unterintervalle ist maximal ein vom Hersteller aufgenommener Initialmesswert hinterlegt, der in Fig. 4 die Höhe eines Quaders am Ort dieses Unterintervalls bestimmt. Es kann auch Unterintervalle geben, zu denen kein Initialmesswert hinterlegt ist, in Fig. 4 dargestellt durch einen fehlenden Quaders am Ort des Unterintervalls.

Ein aus diesem Datenbestand abgeleiteter Satz von ursprünglichen Parameterwerten $p_0^*$, ..., $p_5^*$ kann in der Steuereinheit 14 gespeichert sein oder von dieser wie oben beschrieben zu Beginn eines jeden Einsatzes des Feldhäckslers aus dem Datenbestand abgeleitet werden.

Wenn der Feldhäcksler im Einsatz einen stationären Zustand erreicht, d.h. wenn während einer vorgegebenen Zeitspanne Änderungen von Spaltbreite CC, Drehzahl $n_{HT}$ und CSPS-Wert unter innerhalb eines Intervalls von z.B. +/- 5% um ihren Wert zu Beginn der Zeitspanne bleiben, dann identifiziert die Steuereinheit 14 das Subintervall des Einstellbereichs, in dem das aktuelle Wertepaar von Spaltbreite CC und Drehzahl $n_{HT}$ liegt, und überschreibt den diesem Subintervall zugeordneten Initialmesswert anhand des in diesem stationären Zustand gemessenen CSPS-Werts. Im einfachsten Fall kann der Initialmesswert einfach mit dem neuen Messwert überschrieben werden; denkbar ist aber auch, aus den gespeicherten Initialmesswerten zunächst einen für das aktuelle Wertepaar von Spaltbreite CC und Drehzahl $n_{HT}$ erwarteten CSPS-Wert zu berechnen, die Differenz zwischen diesem und dem gemessenen CSPS-Wert zu bestimmen und dann den für das Subintervall gespeicherten CSPS-Wert um diese Differenz zu korrigieren. Anhand der so geänderten gespeicherten CSPS-Werte wird anschließend nach demselben Verfahren wie zuvor ein aktualisierter Satz von Parametern $p_0$, ..., $p_5$ berechnet.

Während bei der zuerst beschriebenen Ausgestaltung die Parameter $p_0$, ..., $p_5$ basierend auf der im laufenden Einsatz gewonnenen Messwerten von CSPS komplett neu berechnet wurden, sobald die Zahl der Messwerte dies zuließ, bleiben bei der hier betrachteten Ausgestaltung die Initialmesswerte eines Subintervalls so lange für die Berechnung der Parameter erheblich, solange noch kein neuerer Messwert für das betreffende Subintervall vorliegt. Dies mindert den Einfluss, den eine einzelne fehlerhafte Messung auf den auf der Berechnung resultierenden Parametersatz haben kann. Damit ist auch die Wahrscheinlichkeit verringert, dass die Berechnung ein erkennbar falsches Ergebnis liefert. Falls dies doch geschieht, sind dieselben wie oben beschrieben liefert. Falls dies dennoch passiert, sind dieselben Abfangmaßnahmen wie bei der ersten Ausgestaltung beschrieben anwendbar.

**Bezugszeichen**

1 Feldhäcksler
2 Karosserie
3 Vorsatzgerät
4 Einzugwalze
5 Häckseltrommel
6 Schneidkante
7 Crackerwalze
8 Nachbeschleuniger
9 Auswurfkrümmer
10 Kamera
11 Bordcomputer
12 Bildverarbeitungseinheit
13 Optimierungseinheit
14 Steuereinheit

**Patentansprüche**

1. Selbstfahrender Feldhäcksler (1) mit einer zum Häckseln von Erntegut mit einer variablen Drehzahl ($n_{HT}$) angetriebenen Häckseltrommel (5), einem auf einem Weg des Ernteguts durch den Feldhäcksler (1) hinter der Häckseltrommel (5) angeordneten Crackerwalzenpaar (7) mit variabler Spaltbreite (CC) zum Zerkleinern von Körnern im gehäckselten Erntegut und einer Steuereinheit (14) zum Steuern der Drehzahl und der Spaltbreite, wobei die Steuereinheit (14) Teil eines anhand eines Kennfeldes (CF) geregelten Einstellautomaten ist, **dadurch gekennzeichnet, dass** das Kennfeld (CF) einen Corn Silage Processing Score, CSPS, in Abhängigkeit wenigstens von der Drehzahl ($n_{HT}$) und der Spaltbreite (CC) beschreibt.

2. Selbstfahrender Feldhäcksler nach Anspruch 1, bei dem die Steuereinheit (14) eingerichtet ist, anhand des Kennfeldes (CF) die Drehzahl ($n_{HT}$) und die Spaltbreite (CC) passend zu einem Sollwert des CSPS einzustellen.

3. Selbstfahrender Feldhäcksler nach Anspruch 2, bei dem die Steuereinheit (14) eingerichtet ist, im Falle einer signifikanten Abweichung zwischen Soll- und Istwert des CSPS zunächst die Spaltbreite (CC) in einer Richtung zu ändern, für die basierend auf dem Kennfeld (CF) eine Verringerung der Abweichung zu erwarten ist, und die Drehzahl ($n_{HT}$) nur dann zu ändern, wenn die Spaltbreite (CC) eine Grenze ihres Einstellbereichs erreicht hat.

4. Selbstfahrender Feldhäcksler nach Anspruch 1, 2 oder 3, bei dem eine Bildverarbeitungseinheit (12) mit einer auf dem Weg des Ernteguts hinter dem Crackerwalzenpaar (7) angeordneten Kamera (10) verbunden ist, um einen Istwert des CSPS aus von der Kamera (10) gelieferten Bildern des Ernteguts zu ermitteln.

5. Selbstfahrender Feldhäcksler nach Anspruch 4, bei dem die Bildverarbeitungseinheit (12) eingerichtet ist, wenigstens eine Abmessung (d) von in den Bildern abgebildeten Teilchen zu ermitteln und anhand der Abmessung über die Zugehörigkeit des Teilchens zu einer für die Ermittlung des Istwerts des CSPS relevanten Größenfraktion zu entscheiden.

6. Selbstfahrender Feldhäcksler nach einem der vorhergehenden Ansprüche, bei dem die Steuereinheit (14) eingerichtet ist, das Kennfeld (CF) anhand von Abweichungen zwischen einem für ein Wertepaar von Drehzahl ($n_{HT}$) und Spaltbreite (CC) von dem Kennfeld (CF) vorhergesagten CSPS-Wert und einem für das Wertepaar gemessenen CSPS-Wert zu optimieren.

7. Selbstfahrender Feldhäcksler nach Anspruch 6, bei dem die Steuereinheit (14) eingerichtet ist, einen gemessenen CSPS-Wert nur dann für die Optimierung des Kennfeldes heranzuziehen, wenn er während eines quasistationären Zustands des Feldhäckslers gemessen wurde, wobei ein quasistationärer Zustand **dadurch gekennzeichnet ist, dass** in einer vorgegebenen Zeitspanne, die länger ist eine Verweildauer des Ernteguts in dem Feldhäcksler, Änderungen der Drehzahl ($n_{HT}$), der Spaltbreite (CC) und des CSPS-Werts kleiner sind als eine vorgegebene relative Schwankungsbreite.

8. Selbstfahrender Feldhäcksler nach einem der vorhergehenden Ansprüche, bei dem das Kennfeld (CF) durch eine mehrparametrige Funktion wenigstens der Drehzahl ($n_{HT}$) und der Spaltbreite (CC) sowie einen Satz von Werten ($p_0$, ..., $p_5$) der Parameter dieser Funktion definiert ist, und eine Optimierungseinheit (13) eingerichtet ist, basierend auf einem Datenbestand von Wertepaaren der Drehzahl ($n_{HT}$) und der Spaltbreite (CC) und für diese Wertepaare gemessenen CSPS-Werten den Satz von Parameterwerten ($p_0$, ..., $p_5$) mit dem Ziel zu optimieren, dass eine Abweichung zwischen einem Istwert ($C_1$, ...) des CSPS und einem anhand des Kennfeldes erwarteten Werts des CSPS minimiert wird.

9. Selbstfahrender Feldhäcksler nach Anspruch 8, **dadurch gekennzeichnet, dass** die Werte, die die Drehzahl ($n_{HT}$) und die Spaltbreite (CC) im Betrieb annehmen können, einen zweidimensionalen Einstellbereich definieren, dass die Wertepaare des Datenbestandes in dem zweidimensionalen Einstellbereich ein Punktgitter definieren, und dass, wenn ein gemessener CSPS-Wert für ein Wertepaar von Drehzahl ($n_{HT}$) und Spaltbreite (CC) vorliegt, das keinem Punkt des Gitters entspricht, der diesem Wertepaar nächstbenachbarte Punkt des Gitters ermittelt und der diesem Punkt zugeordnete CSPS-Wert des Datenbestandes anhand des gemessenen CSPS-Werts überschrieben wird.

10. Selbstfahrender Feldhäcksler nach Anspruch 9, **dadurch gekennzeichnet, dass** die mehrparametrige Funktion ein Polynom zweiter Ordnung in Drehzahl und Spaltbreite ist.

11. Selbstfahrender Feldhäcksler nach einem der Ansprüche 9 bis 10, **dadurch gekennzeichnet, dass** die Optimierungseinheit eingerichtet ist, eine erste Optimierung vorzunehmen, bevor die Zahl der Paare von gemessenen und erwarteten Werten des CSPS der Zahl der Parameter entspricht.

12. Verfahren zum Betreiben eines Feldhäckslers, insbesondere eines Feldhäckslers nach einem der Ansprüche 1 bis 11, mit den Schritten:

- Vorgeben einer eine mehrparametrigen Funktion (CSPS($n_{HT}$, CC)) wenigstens der Drehzahl ($n_{HT}$) einer Häckseltrommel (5) und der Spaltbreite (CC) eines Crackerspalts sowie eines ursprünglichen Satzes ($p_0^*$, ..., $p_5^*$) von Parameterwerten, die ein ursprüngliches Kennfeld (CF) des Corn Silage Processing Score, CSPS, in Abhängigkeit wenigstens von der Drehzahl und der Spaltbreite definieren;
- Ermitteln eines Istwertes ($C_1$, ...) des CSPS für Istwerte ($P_1$,...) der Drehzahl und der Spaltbreite;
- Ersetzen des ursprünglichen Satzes von Parameterwerten ($p_0^*$, ..., $p_5^*$) durch einen optimierten Satz ($p_0$, ..., $p_5$), wobei die Parameterwerte des optimierten Satzes so gewählt sind, dass die Abweichung zwischen dem Istwert ($C_1$, ...) des CSPS und einem anhand des Kennfelds erwarteten Wert bei Verwendung der optimierten Parameterwerte kleiner ist als bei Verwendung der ursprünglichen Parameterwerte.

13. Computerprogramm-Produkt, das ausführbare Anweisungen umfasst, die, wenn sie von einem Computer ausgeführt werden, diesen befähigen, wenigstens als Steuereinheit, optional auch als Optimierungseinheit und/oder Bildverarbeitungseinheit, in einem Feldhäcksler nach einem der Ansprüche 1 bis 11 zu arbeiten oder das Verfahren nach Anspruch 12 auszuführen.

**Claims**

1. Self-propelled forage harvester (1) comprising a cutterhead (5) driven at a variable rotational speed ($n_{HT}$) for chopping harvested crop, a cracker roller pair (7) arranged behind the cutterhead (5) on a path of the harvested crop through the forage harvester (1) and having a variable gap width (CC) for comminuting grains in the chopped harvested crop, and a control unit (14) for controlling the rotational speed and the gap width; the control unit (14) being part of an automatic setting machine controlled on the basis of a characteristic map (CF), **characterized in that** the characteristic map (CF) describes a corn silage processing score, CSPS, depending at least on the rotational speed ($n_{HT}$) and the gap width (CC).

2. Self-propelled forage harvester according to Claim 1, wherein the control unit (14) is configured to set the rotational speed ($n_{HT}$) and the gap width (CC) appropriately with respect to a target value of the CSPS on the basis of the characteristic map (CF).

3. Self-propelled forage harvester according to Claim 2, wherein the control unit (14) is configured, in the case of a significant deviation between the target and actual values of the CSPS, firstly to change the gap width (CC) in a direction for which a reduction of the deviation is to be expected based on the characteristic map (CF), and to change the rotational speed ($n_{HT}$) only if the gap width (CC) has reached a limit of its setting range.

4. Self-propelled forage harvester according to Claim 1, 2 or 3, wherein an image processing unit (12) is connected to a camera (10) arranged behind the cracker roller pair (7) on the path of the harvested crop, in order to determine an actual value of the CSPS from images of the harvested crop supplied by the camera (10).

5. Self-propelled forage harvester according to Claim 4, wherein the image processing unit (12) is configured to determine at least one dimension (d) of particles depicted in the images and, on the basis of the dimension, to decide about the association of the particle with a size fraction relevant for the determination of the actual value of the CSPS.

6. Self-propelled forage harvester according to any of the preceding claims, wherein the control unit (14) is configured to optimize the characteristic map (CF) on the basis of deviations between a CSPS value predicted by the characteristic map (CF) for a value pair of rotational speed ($n_{HT}$) and gap width (CC) and a CSPS value measured for the value pair.

7. Self-propelled forage harvester according to Claim 6, wherein the control unit (14) is configured to use a measured CSPS value for the optimization of the characteristic map only if said value was measured during a quasi-steady state of the forage harvester, a quasi-steady state being **characterized in that** in a specified period of time which is longer a dwell time of the harvested crop in the forage harvester, changes in the rotational speed ($n_{HT}$), the gap width (CC) and the CSPS value are smaller than a specified relative fluctuation range.

8. Self-propelled forage harvester according to any of the preceding claims, wherein the characteristic map (CF) is defined by a multi-parameter function of at least the rotational speed ($n_{HT}$) and the gap width (CC) and also a set of values ($p_0$, ..., $p_5$) of the parameters of this function, and an optimization unit (13) is configured, based on a dataset of value pairs of the rotational speed ($n_{HT}$) and the gap width (CC) and CSPS values measured for these value pairs, to optimize the set of parameter values ($p_0$, ..., $p_5$) with the aim of minimizing a deviation between an actual value ($C_1$, ...) of the CSPS and a value of the CSPS expected on the basis of the characteristic map.

9. Self-propelled forage harvester according to Claim 8, **characterized in that** the values that can be assumed by the rotational speed ($n_{HT}$) and the gap width (CC) during operation define a two-dimensional setting range, **in that** the value pairs of the dataset define a point grid in the two-dimensional setting range, and **in that**, if there is a measured CSPS value for a value pair of rotational speed ($n_{HT}$) and gap width (CC) that does not correspond to any point of the grid, the nearest neighbouring point of the grid with respect to this value pair is determined and the CSPS value of the dataset assigned to this point is overwritten on the basis of the measured CSPS value.

10. Self-propelled forage harvester according to Claim 9, **characterized in that** the multi-parameter function is a second-order polynomial in rotational speed and gap width.

11. Self-propelled forage harvester according to either of Claims 9 and 10, **characterized in that** the optimization unit is configured to perform a first optimization before the number of pairs of measured and expected values of the CSPS corresponds to the number of parameters.

12. Method for operating a forage harvester, in particular a forage harvester according to any of Claims 1 to 11, comprising the steps of:

- specifying a multi-parameter function ($CSPS(n_{HT}, CC)$) of at least the rotational speed ($n_{HT}$) of a cutterhead (5) and the gap width (CC) of a cracker gap and also an original set ($p_0^*$, ..., $p_5^*$) of parameter values which define an original characteristic map (CF) of the corn silage processing score, CSPS, depending on at least the rotational speed and the gap width;
- determining an actual value ($C_1$, ...) of the CSPS for actual values ($P_1$, ...) of the rotational speed and the gap width;
- replacing the original set of parameter values ($p_0^*$, ..., $p_5^*$) with an optimized set ($p_0$, ..., $p_5$), the parameter values of the optimized set being chosen such that the deviation between the actual value ($C_1$, ...) of the CSPS and a value expected on the basis of the characteristic map is smaller when using the optimized parameter values than when using the original parameter values.

13. Computer program product comprising executable instructions which, when they are executed by a computer, enable the computer to operate at least as a control unit, optionally also as an optimization unit and/or image processing unit, in a forage harvester according to any of Claims 1 to 11, or to execute the method according to Claim 12.

**Revendications**

1. Récolteuse-hacheuse automotrice (1) avec un tambour de hachage (5) entraîné à une vitesse de rotation ($n_{HT}$) variable pour hacher des produits de récolte, une paire de rouleaux de concassage (7) disposée derrière le tambour de hachage (5) sur un trajet des produits de récolte à travers la récolteuse-hacheuse (1) avec une largeur d'écartement (CC) variable destinée à broyer des grains dans les produits de récolte hachés et une unité de commande (14) destinée à commander la vitesse de rotation et la largeur d'écartement,

   l'unité de commande (14) faisant partie d'une machine de réglage automatique régulée à l'aide d'un diagramme caractéristique (CF),
   **caractérisée en ce que** le diagramme caractéristique (CF) décrit un score CSPS (score de traitement de l'ensilage du maïs) en fonction d'au moins la vitesse de rotation ($n_{HT}$) et la largeur d'écartement (CC).

2. Récolteuse-hacheuse automotrice selon la revendication 1, dans laquelle l'unité de commande (14) est mise au point pour régler la vitesse de rotation ($n_{HT}$) et la largeur d'écartement (CC) de manière adaptée à une valeur de consigne du CSPS à l'aide du diagramme caractéristique (CF).

3. Récolteuse-hacheuse automotrice selon la revendication 2, dans laquelle l'unité de commande (14) est mise au point pour modifier d'abord, dans le cas d'un écart significatif entre une valeur de consigne et une valeur réelle du CSPS, la largeur d'écartement (CC) dans une direction pour laquelle on peut s'attendre à une réduction de l'écart sur la base du diagramme caractéristique (CF), et pour ne modifier alors la vitesse de rotation ($n_{HT}$) que lorsque la largeur d'écartement (CC) a atteint une limite de sa plage de réglage.

4. Récolteuse-hacheuse automotrice selon la revendication 1, 2 ou 3, dans laquelle une unité de traitement d'image (12) est reliée à une caméra (10) disposée sur le trajet des produits de récolte derrière la paire de rouleaux de concassage (7) pour déterminer une valeur réelle du CSPS à partir d'images des produits de récolte fournies par la caméra (10).

5. Récolteuse-hacheuse automotrice selon la revendication 4, dans laquelle l'unité de traitement d'image (12) est mise au point pour déterminer au moins une dimension (d) de particules représentées sur les images et pour décider, à l'aide de la dimension, de l'appartenance de la particule à une fraction granulométrique pertinente pour déterminer la valeur réelle du CSPS.

6. Récolteuse-hacheuse automotrice selon l'une des revendications précédentes, dans laquelle l'unité de commande (14) est mise au point pour optimiser le diagramme caractéristique (CF) à l'aide d'écarts entre une valeur de CSPS prédite pour une paire de valeurs de la vitesse de rotation ($n_{HT}$) et de la largeur d'écartement (CC) par le diagramme caractéristique (CF) et une valeur de CSPS mesurée pour la paire de valeurs.

7. Récolteuse-hacheuse automotrice selon la revendication 6, dans laquelle l'unité de commande (14) est mise au point pour prendre en compte une valeur de CSPS mesurée pour l'optimisation du diagramme caractéristique uniquement lorsqu'elle a été mesurée pendant un état quasi stationnaire de la récolteuse-hacheuse, un état quasi stationnaire étant **caractérisé en ce que**, dans un laps de temps spécifié, qui est plus long qu'une durée de séjour des produits de récolte dans la récolteuse-hacheuse, des modifications de la vitesse de rotation ($n_{HT}$), de la largeur d'écartement (CC) et de la valeur de CSPS sont inférieures à une largeur de fluctuation relative spécifiée.

8. Récolteuse-hacheuse automotrice selon l'une des revendications précédentes, dans laquelle le diagramme caractéristique (CF) est défini par une fonction à variables multiples d'au moins la vitesse de rotation ($n_{HT}$) et la largeur d'écartement (CC) et par un jeu de valeurs ($p_0$, ..., $p_5$) des paramètres de ladite fonction et une unité d'optimisation (13) est mise au point pour optimiser sur la base d'un stock de données de paires de valeurs de la vitesse de rotation ($n_{HT}$) et de la largeur d'écartement (CC) et de valeurs de CSPS mesurées pour lesdites paires de valeurs le jeu de valeurs de paramètre ($p_0$, ..., $p_5$) dans l'objectif de minimiser un écart entre une valeur réelle ($C_1$, ...) du CSPS et une valeur du CSPS attendue à l'aide du diagramme caractéristique.

9. Récolteuse-hacheuse automotrice selon la revendication 8, **caractérisée en ce que** les valeurs, que peuvent prendre la vitesse de rotation ($n_{HT}$) et la largeur d'écartement (CC) en fonctionnement, définissent une plage de réglage bidimensionnelle, que les paires de valeurs du stock de données dans la plage de réglage bidimensionnelle définissent une grille de points et que, lorsqu'il existe une valeur de CSPS mesurée pour une paire de valeurs vitesse de rotation ($n_{HT}$) et largeur d'écartement (CC) qui ne correspond à aucun point de la grille, le point de la grille le plus proche de ladite paire de valeurs est déterminé et la valeur de CSPS du stock de données associée audit point est écrasée à l'aide de la valeur de CSPS mesurée.

10. Récolteuse-hacheuse automotrice selon la revendication 9, **caractérisée en ce que** la fonction à variables multiples est un polynôme de second ordre en vitesse de rotation et en largeur d'écartement.

11. Récolteuse-hacheuse automotrice selon l'une des revendications 9 à 10, **caractérisée en ce que** l'unité d'optimisation est mise au point pour réaliser une première optimisation avant que le nombre des paires de valeurs mesurées et attendues du CSPS ne corresponde au nombre des paramètres.

12. Procédé destiné à faire fonctionner une récolteuse-hacheuse, en particulier une récolteuse-hacheuse selon l'une des revendications 1 à 11, avec les étapes :

- spécification d'une fonction à variables multiples (CSPS ($n_{HT}$, CC)) d'au moins la vitesse de rotation ($n_{HT}$) d'un tambour de hachage (5) et la largeur d'écartement (CC) d'une fente de concassage ainsi que d'un jeu initial ($p_0^*$, ..., $p_5^*$) de valeurs de paramètre, qui définissent un diagramme caractéristique initial (CF) du score CSPS en fonction au moins de la vitesse de rotation et de la largeur d'écartement ;
- détermination d'une valeur réelle ($C_1$, ...) du CSPS pour des valeurs réelles ($P_1$,...) de la vitesse de rotation et de la largeur d'écartement ;
- remplacement du jeu initial de valeurs de paramètre ($p_0^*$, ..., $p_5^*$) par un jeu optimisé ($p_0$, ..., $p_5$), les valeurs de paramètre du jeu optimisé étant choisies de telle sorte que l'écart entre la valeur réelle ($C_1$, ...) du CSPS et une valeur attendue à l'aide du diagramme caractéristique est inférieur lors de l'utilisation des valeurs de paramètre optimisées à celui lors de l'utilisation des valeurs de paramètre initiales.

13. Produit de programme d'ordinateur, qui comprend des instructions exécutables qui, lorsqu'elles sont exécutées par un ordinateur, permettent à l'ordinateur de fonctionner au moins comme une unité de commande, en option également comme une unité d'optimisation et/ou une unité de traitement d'image, dans une récolteuse-hacheuse selon l'une des revendications 1 à 11 ou pour exécuter le procédé selon la revendication 12.

## Fig. 1

## Fig. 2

## Fig. 3

## Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102020123526 A1
- DE 102018104286

- EP 3542610 B1